# EUROPEAN PATENT APPLICATION

(11) **EP 2 532 987 A2**
(43) Date of publication of application: **12.12.2012**
(21) Application number: 11188144.7
(22) Date of filing: 08.11.2011
(51) Int. Cl.: F24J 2/52

(54) **Adjustable mount for supporting solar panel and angle-adjusting method therefor**

(30) Priority: 07.06.2011 TW 100119757
(71) Applicant: AU Optronics Corp., Hsin-Chu 300 (TW)
(72) Inventor: Shih, Ching-Chieh, 300 Hsin-Chu (TW); Yen, Tung-I, 300 Hsin-Chu (TW); Chiang, Pei-Ling, 300 Hsin-Chu (TW)
(74) Representative: Straus, Alexander

(57) **Abstract**

An adjustable mount (1,3) for supporting solar panel and an angle-adjusting method therefor are disclosed. The adjustable mount (1,3) includes a frame (12,32) where at least one solar panel (2) can be mounted, an angle-adjusting device (14,34) disposed on the frame (12,32), and a side support (16,36) connected to the frame (12,32) through the angle-adjusting device (14,34). The angle-adjusting device (14,34) includes an angle index part (146,344) for providing finite angle positions. A relative rotation angle of the side support (16,36) and the frame (12,32) canbeadjustedbyengagingthe side support (16,36) and the angle index part (146,344). The relative rotation angle corresponds to one of the finite angle positions. Therefore, the invention can mount the solar panel (2) in different angles based on various demands, which overcomes the poor utilization of solar energy by the solar panel mounted in an immovable angle in the prior art.

## Description

### Field of the Invention

The invention relates to an adjustable mount and a related angle-adjusting method according to the pre-characterizing clauses of claims 1 and 11.

### Background of the Invention

As light-emitting power of Light-Emitting Diodes (LEDs) is improving, solar power generation has entered commercial operation. Because a solar panel performs photovoltaic conversion with sunlight, the intensity of the sunlight received by the solar panel becomes important. In a system design employing an immovable receiving angle, a supporting mount thereof provides only an immovable supporting angle for solar panels. Therefore, the angle is normally designed to be an optimum angle of inclination for a particular locality, so that the solar panels can receive the most solar energy possible. However, the optimum angle of inclination is not the same for every locality. The supporting mount providing only one immovable angle for supporting the solar panels cannot meet the requirement of optimum angle of inclination for every locality. In other words, the solar panels on the supporting mount with a single immovable inclination utilize sunlight poorly in some localities, leading to solar energy loss. If the supporting mount is customized for each locality, the cost of manufacturing and stock management will increase.

### Summary of the Invention

This in mind, the present invention aims at providing an adjustable mount for supporting solar panels and an angle-adjusting method for the adjustable mount that use an angle-adjusting device providing finite angle positions to provide various disposition angles for the adjustable mount.

This is achieved by an adjustable mount and a related angle-adjusting method for the adjustable mount according to claims 1 and 11. The dependent claims pertain to corresponding further developments and improvements.

As will be seen more clearly from the detailed description following below, the claimed adjustable mount includes a frame for fixing at least one solar panel, an angle-adjusting device disposed on the frame, and a first side support connected to the frame through the angle-adjusting device. The angle-adjusting device includes an angle index part for providing finite angle positions. Therein, a relative rotation angle of the first side support and the frame is capable of being adjusted by engaging the first side support and the angle index part, and the relative rotation angle corresponds to one of the finite angle positions. Therefore, the claimed angle-adjusting method for the claimed adjustable mount is to engage the first side support and the angle index part so as to adjust the relative rotation angle.

### Brief Description of the Drawings

In the following, the invention is further illustrated by way of example, taking reference to the accompanying drawings. Thereof:
FIG. 1 is a schematic diagram illustrating a partially-exploded view of an adjustable mount of a preferred embodiment according to the invention,
FIG. 2 is a schematic diagram illustrating a side view of the adjustable mount in FIG. 1,
FIG. 3 is a sectional view of a bottom bar of the adjustable mount in FIG. 1,
FIG. 4 is a flow chart of an angle-adjusting method for the adjustable mount in FIG. 1 according to an embodiment,
FIG. 5 is a schematic diagram illustrating a partially-exploded view of an adjustable mount of another preferred embodiment according to the invention, and
FIG. 6 is a flow chart of an angle-adjusting method for the adjustable mount in FIG. 4 according to an embodiment.

### Detailed Description

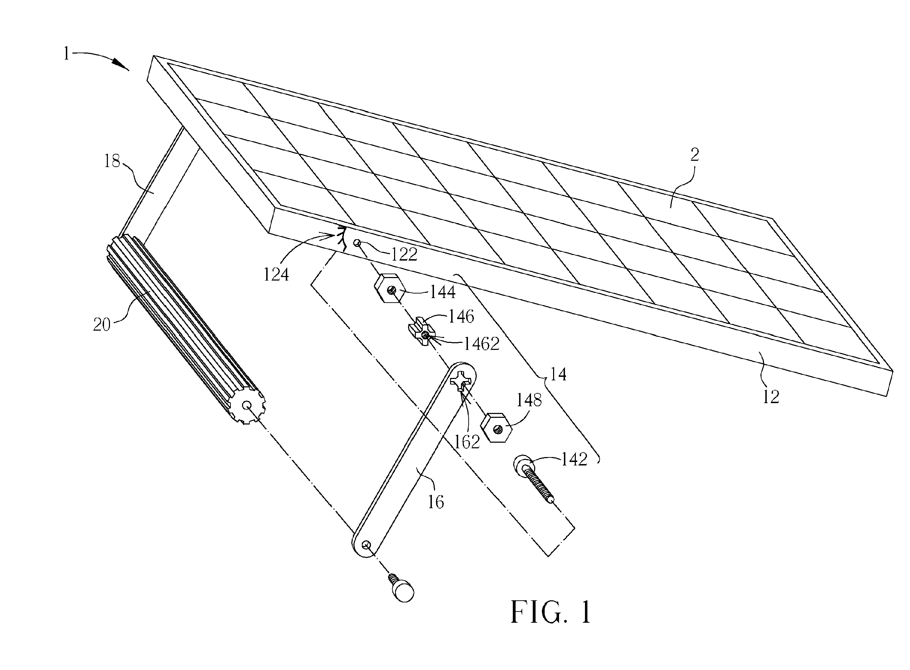

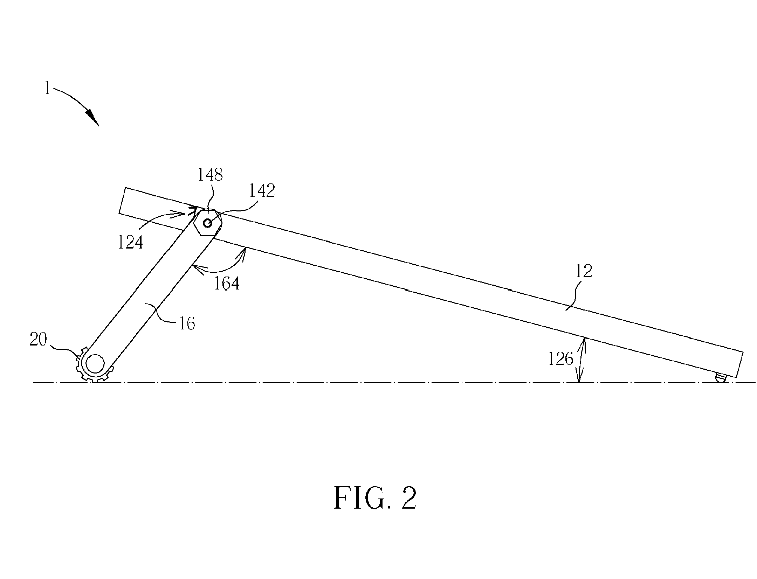

Please refer to FIG. 1 and FIG. 2. FIG. 1 is a schematic diagram illustrating a partially-exploded view of an adjustable mount 1 of a preferred embodiment according to the invention; therein, solar panels 2 are fixed on the adjustable mount 1. FIG. 2 is a schematic diagram illustrating a side view of the adjustable mount 1. The adjustable mount 1 includes a frame 12, an angle-adjusting device 14, a first side support 16, a second side support 18, and a bottom bar 20. The solar panels 12 are fixed on the frame 12. The first side support 16 and the second side support 18 are connected to two ends of the bottom bar 20 oppositely and pivotally connected to two sides of the frame 12, for supporting the frame 12. Therein, the angle-adjusting device 14 is disposed on the frame 12. The first side support 16 is connected to the frame 12 through the angle-adjusting device 14. In the embodiment, only the second side support 18 is directly pivotally connected to the frame 12, but the invention is not limited thereto. In practice, the second side support 18 can also be connected to the frame 12 through the angle-adjusting device 14, which enhances support stability.

In the embodiment, the angle-adjusting device 14 includes a bolt 142, a first nut 144, an angle index part 146, and a second nut 148. The frame 12 has a through hole 122. The bolt 142 passes through the through hole 122 from the inside of the frame 12. The first nut 144 is screwed tightly on the bolt 142 to be fixed on the frame 12. The angle index part 146 is a gear, sleeved on the bolt 142 to be fixed. The first side support 16 has a teeth-shaped through hole 162 corresponding to the angle index part 146, for engaging with the angle index part 146. The above fixing configuration can be performed by screwing the second nut 148 on the bolt 142 to pack the angle index part 146. In this case, the second nut 148 can be a nut capable of passing through the teeth-shaped through hole 162 so that the first side support 16 can be sleeved directly on the angle index part 146. Or, the angle index part 146 thereon forms an inner thread 1462, and then the above fixing configuration can be performed by screwing the angle index part 146 on the bolt 142 through the inner thread 1462. Or, the above fixing configuration can be performed by fixing the angle index part 146 on the bolt 142 by use of other adhering or soldering. The angle-adjusting device 14 provides finite angle positions by use of the angle index part 146. In practice, the angle position means the status of the engagement angle of the first side support 16 and the angle index part 146, and influences the relative rotation angle 164 of the first side support 16 and the frame 12, but not directly in a numerical conversion of a numerical equation. This is because the relative rotation angle 164 is also influenced by the relative disposition angle of the angle index part 146 and the frame 12. In practice, the above relations can be quantified so that the angle position can be converted into a corresponding value of the relative rotation angle 164; however, the invention is not limited thereto. In the embodiment, the angle index part 146 has four teeth, so the angle index part 146 can provide four angle positions logically; however, in practice, two of the teeth are used for positioning. The relative rotation angle 164 of the first side support 16 and the frame 12 can be adjusted by engaging the first side support 16 and the angle index part 146; in other words, it is adjusted by engaging the teeth-shaped through hole 162 and the angle index part 146 in different rotation angles. After adjusted, the relative rotation angle 164 corresponds to one of the finite angle positions.

In addition, the angle index part 146 uses a gear structure, so that junction strength of the angle index part 146 and the first side support 16 is stronger than that of a common fitting of shaft and hole, so as to obtain a stable supporting angle. Furthermore, if the angle index part 146 is screwed tightly on the bolt 142 through the inner thread 1462, the second nut 148 can be a nut larger than the teeth-shaped through hole 162, lest the first side support 16 should depart from the angle index part 146. In addition, the frame 12 thereon forms an angle scale 124 close to the angle-adjusting device 14. The angle scale 124 includes a plurality of marks (shown by bold lines) corresponding to the finite angle positions; it is conducive to setting the relative rotation angle 164 during the engagement of the first side support 16 and the angle index part 146. Additionally, referring to FIG. 2, a disposition angle for the solar panels 2 generally indicates the included angle 126 of the frame 12 and the ground (shown by a chain line). Although the above illustration of the invention is not based on the included angle 126, a person of ordinary skill in the art can obtain needed information through simple geometric conversion according to the actual size of a product; therefore, it is not described in detail herein.

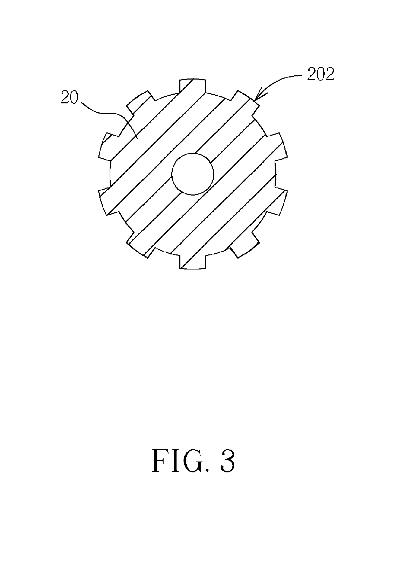

Please refer to FIG. 3, which is a sectional view of the bottom bar 20, the section position of which is substantially shown by the line X-X in FIG. 1 . The bottom bar 20 has an anti-skid surface structure 202. In the embodiment, the anti-skid surface structure 202 is a teeth-shaped surface and can enhance frictional force by the ground. In practice, the anti-skid surface structure of the invention is not limited to the square-teeth-shaped surface as shown in FIG. 3. For example, a taper-teeth-shaped surface or a rough surface is also able to enhance the frictional force by the ground.

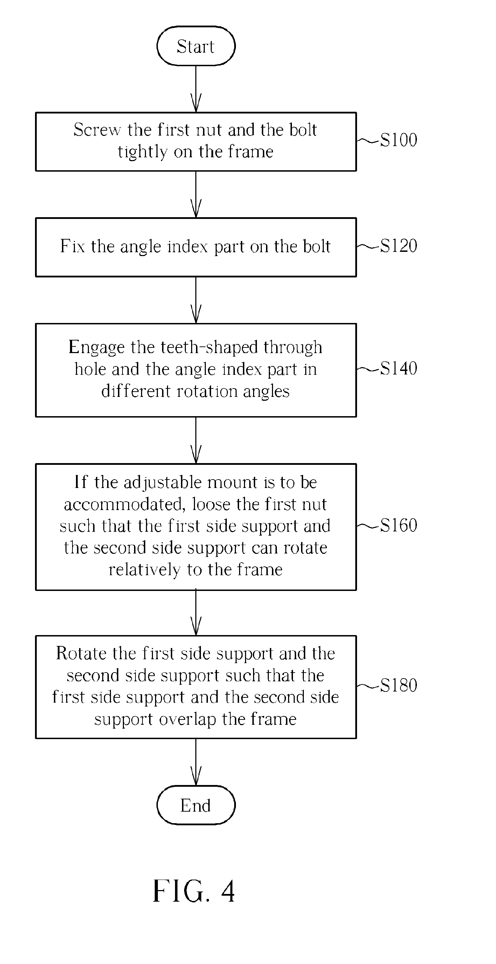

Please refer to FIG. 4, which is a flow chart of an angle-adjusting method for the adjustable mount 1 according to an embodiment. The angle-adjusting method is first to screw the first nut 144 and the bolt 142 tightly on the frame 12, shown as step S100, and then to fix the angle index part 146 on the bolt 142, shown as step S120. The fixing of the angle index part 146 can be performed by packing with the second nut 148, by the inner thread 1462 formed on the angle index part 146, or by use of other adhering or soldering; the related description therefor is described in the above paragraphs, and is not repeated here. The angle-adjusting method is then to engage the teeth-shaped through hole 162 and the angle index part 146 in different rotation angles for adjusting the relative rotation angle 164 so as to obtain the needed relative rotation angle 164, shown as step S140; therein, the adjusted relative rotation angle 164 corresponds to one of the finite angle positions. If the adjustable mount 1 is to be accommodated for storage, the angle-adjusting method is to loosen the first nut 144, such that the first side support 16 and the second side support 18 can rotate relative to the frame 12, shown as step S160, and then to rotate the first side support 16 and the second side support 18, such that the first side support 16 and the second side support 18 overlap the frame 12, shown as step S180.

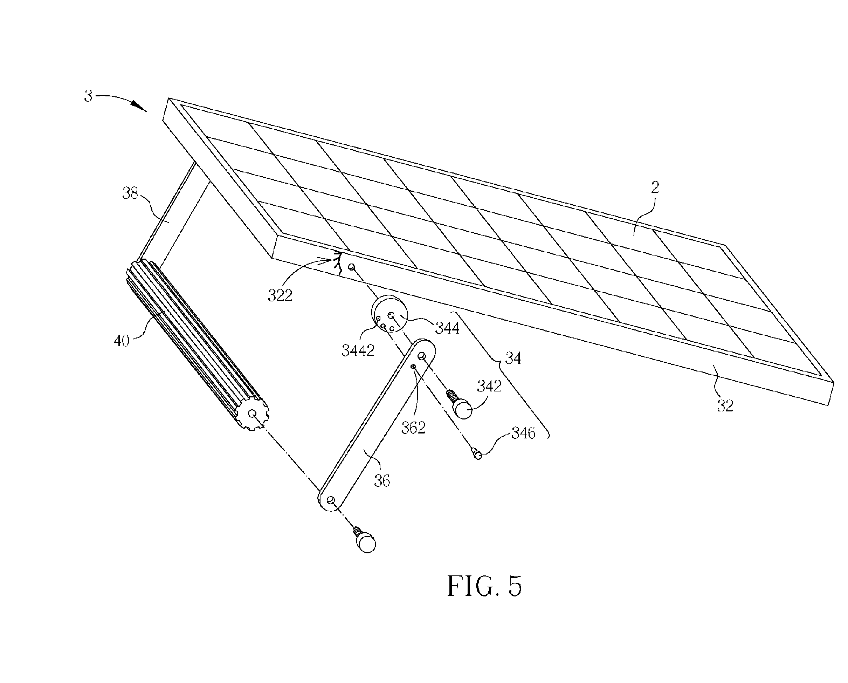

Please refer to FIG. 5, which is a schematic diagram illustrating a partially-exploded view of an adjustable mount 3 of another preferred embodiment according to the invention; therein, solar panels 2 are fixed on the adjustable mount 3. The adjustable mount 3 includes a frame 32, an angle-adjusting device 34, a first side support 36, a second side support 38, and a bottom bar 40. The adjustable mount 3 and the adjustable mount 1 are similar in structure. The following description is focused on the differences therebetween. Other related descriptions of the adjustable mount 3 refer to the above-mentioned description and are not described here. The angle-adjusting device 34 of the adjustable mount 3 includes a bolt 342, an angle index part 344, and a pin 346. The angle index part 344 is an index plate fixed on the frame 32 having a plurality of first positioning holes 3442. Fixing therefor can be performed by use of a screw to screw the angle index part 344 tightly on the frame 32 with or by use of adhering or soldering to fix the angle index part 344 on the frame 32. The bolt 342 screws the first side support 36 tightly on the frame 32. The first side support 36 has a second positioning hole 362. The relative rotation angle (referring to the relative rotation angle 164 shown in FIG. 2) of the first side support 36 and the frame 32 can be adjusted by inserting the pin 346 into the second positioning hole 362 and one of the first positioning holes 3442.

Similarly, the angle-adjusting device 34 can provide finite angle positions by use of the first positioning hole 3442 of the angle index part 344. In principle, each angle position corresponds to one of the first positioning holes 3442. A user can insert the pin 346 into the second positioning hole 362 and any of the first positioning holes 3442 to achieve the purpose of adjusting the relative rotation angle. In the embodiment, the frame 32 thereon forms an angle scale 322 close to the angle-adjusting device 34. The angle scale 322 includes a plurality of marks (shown by bold lines) corresponding to the finite angle positions. During rotation of the first side support 36, the first side support 36 can be aligned with one of the marks for convenience of the user to insert the pin 346 into the second positioning hole 362 and the corresponding first positioning hole 3442, so as to perform the adjustment of the relative rotation angle.

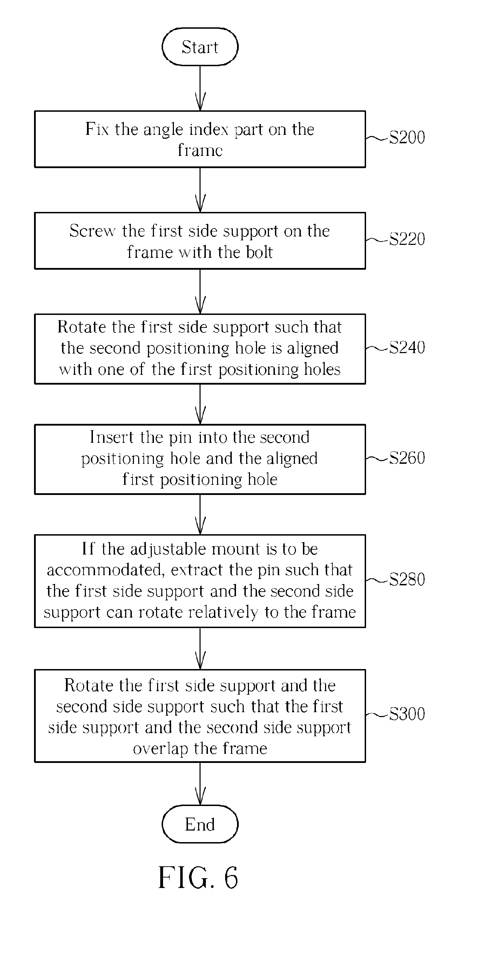

Please refer to FIG. 6, which is a flow chart of an angle-adjusting method for the adjustable mount 3 according to an embodiment. The angle-adjusting method is first to fix the angle index part 344 on the frame 32, shown as step S200, and then to screw the first side support 36 on the frame 32 with the bolt 342, shown as step S220. At this moment, it is unnecessary for the blot 342 to screw the first side support 36 tightly, so that the first side support 36 is capable of rotating relatively to the frame 32. Then, the angle-adjusting method rotates the first side support 36 such that the second positioning hole 362 is aligned with one of the first positioning holes 3442, shown as step S240, and then to insert the pin 346 into the second positioning hole 362 and the aligned first positioning hole 3442 so as to obtain the needed relative rotation angle (referring to the relative rotation angle 164 shown in FIG. 2), shown as step S260. In practice, the angle scale 322 is formed on the frame 32 of the adjustable mount 3, so before the step S240, the angle-adjusting method may include rotating the first side support 36 to align one of the marks in advance. Then, in the step S240, the angle-adjusting method aligns the second positioning hole 362 with the first positioning hole 3442 corresponding to the mark quickly and precisely. If the adjustable mount 3 is to be accommodated for storage, the angle-adjusting method extracts the pin 346, such that the first side support 36 and the second side support 38 can rotate relative to the frame 32, shown as step S280, and then to rotate the first side support 36 and the second side support 38 such that the first side support 36 and the second side support 38 overlap the frame 32 for storage, shown as step S300.

As discussed above, the adjustable mount and the angle-adjusting method of the invention can provide finite angles of fixing the solar panel by use of the angle-adjusting device. During positioning of the adjustable mount, the invention adjusts the relative rotation angle of the side support and the frame by engaging the side support and the angle index part, so as to meet requirements of optimum angle of inclination for different operation localities so that the solar panel can receive sunlight at a better angle to enhance the utilization of the received sunlight, which solves the problem that the supporting mount with the single immovable angle cannot be applied to different localities effectively in the prior art.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An adjustable mount (1,3) for supporting a solar panel, comprising:
a frame (12,32), for fixing at least one solar panel (2);
**characterized by**:
an angle-adjusting device (14,34) disposed on the frame (12,32), the angle-adjusting device (14,34) comprising an angle index part (146, 344) for providing finite angle positions; and
a first side support (16,36) connected to the frame (12,32) through the angle-adjusting device (14,34);
**characterized in that** a relative rotation angle of the first side support (16,36) and the frame (12,32) is capable of being adjusted by engaging the first side support (16,36) and the angle index part (146,344), and the relative rotation angle corresponds to one of the finite angle positions.

2. The adjustable mount (1) of claim 1, **characterized in that** the angle-adjusting device (14) further comprises a bolt (142) and a first nut (144), the angle index part (146) is a gear, the first nut (144) is screwed tightly on the bolt (142) to be fixed on the frame (12), the angle index part (146) is fixed on the bolt (142), the first side support (16) has a teeth-shaped through hole (162) engaged with the angle index part (146), and the relative rotation angle is capable of being adjusted by engaging the teeth-shaped through hole (162) and the angle index part (146) in different rotation angles.

3. The adjustable mount (1) of claim 2, **characterized in that** the angle-adjusting device (14) further comprises a second nut (148) screwed tightly on the bolt (142) to fix the angle index part (146).

4. The adjustable mount (1) of claim 2, **characterized in that** the angle index part (146) has an inner thread (1462), and the angle index part (146) is screwed tightly on the bolt (142) by the inner thread (1462).

5. The adjustable mount of claim 1 (3), **characterized in that** the angle-adjusting device (34) further comprises a bolt (342) and a pin (346), the angle index part (344) is an index plate mounted on the frame (32) and having a plurality of first positioning holes (3442), the first side support (36) is screwed on the frame (32) with the bolt (342), the first side support (36) has a second positioning hole (362), and the relative rotation angle is capable of being adjusted by inserting the pin (346) into the second positioning hole (362) and one of the first positioning holes (3442).

6. The adjustable mount of claim 1 (1,3), **characterized in that** the frame (12,32) has an angle scale (124,322) close to the angle-adjusting device (14,34), and the angle scale (124,322) comprises a plurality of marks corresponding to the finite angle positions.

7. The adjustable mount of claim 1 (1,3), **characterized by** a bottombar (20,40) connected to the first side support (16,36) for supporting the frame (12,32), **characterized in that** the bottom bar(20,40) has an anti-skid surface structure.

8. The adjustable mount of claim 7 (1,3), **characterized in that** the anti-skid surface structure is a rough surface or a teeth-shaped surface.

9. The adjustable mount of claim 7 (1,3), **characterized by** a second side support (18,38) pivotally connected to the frame (12,32) relative to the first side support (16,36) and connected to the bottom bar (20,40).

10. An angle-adjusting method for the adjustable mount (1,3) of claim 1, the angle-adjusting method **characterized by** comprising the following step:
(a) engaging the first side support (16,36) and the angle index part (146,344) to adjust the relative rotation angle, wherein the relative rotation angle corresponds to one of the finite angle positions.

11. The angle-adjusting method of claim 10, **characterized in that** the angle-adjusting device further comprises a bolt (142) and a first nut (144), the angle index part (146) is a gear, the first nut (144) is screwed tightly on the bolt (142) to be fixed on the frame (12), the angle index part (146) is fixed on the bolt (142), the first side support (16) has a teeth-shaped through hole (162), and the step (a) is performed by the following step:
(a1) engaging the teeth-shaped through hole (162) and the angle index part (146) in different rotation angles.

12. The angle-adjusting method of claim 11, **characterized in that** the angle-adjusting device (14) further comprises a second nut (148), and the step (a) further comprises the following step:
(a2) screwing the second nut (148) tightly on the bolt (142) to fix the angle index part (146).

13. The angle-adjusting method of claim 11, **characterized by** the following steps:
(b) loosening the first nut (144); and
(c) rotating the first side support (16) such that the first side support (16) and the frame (12) overlap for storage.

14. The angle-adjusting method of claim 10, **characterized in that** the angle-adjusting device (34) further comprises a bolt (342) and a pin (346), the angle index part (344) is an index plate mounted on the frame (32) and having a plurality of first positioning holes (3442), the first side support (36) is screwed on the frame (32) with the bolt (342), the first side support (36) has a second positioning hole (362), and the step (a) is performed by the following steps:
(a3) rotating the first side support (36) such that the second positioning hole (362) is aligned with one of the first positioning holes (3442); and
(a4) inserting the pin (346) into the second positioning hole (362) and the aligned first positioning hole (3442) .

15. The angle-adjusting method of claim 10, **characterized in that** the frame (12,32) has an angle scale (124,322) close to the angle-adjusting device (14,34), the angle scale (124,322) comprises a plurality of marks corresponding to the finite angle positions, and the step (a) further comprises the following step:
(a5) rotating the first side support (16, 36) to be aligned with one of the marks.
